Europäisches Patentamt

(19) **European Patent Office**

**Office européen des brevets**

(11) Numéro de publication : **0 100 801**
**B1**

(12) **FASCICULE DE BREVET EUROPÉEN**

(45) Date de publication du fascicule du brevet :
27.05.87

(51) Int. Cl.⁴ : **G 06 F   7/22**

(21) Numéro de dépôt : **82401495.5**

(22) Date de dépôt : **06.08.82**

(54) Procédé de rapprochement entre des entités logiques de référence et des entités logiques issues d'un fichier.

(43) Date de publication de la demande :
22.02.84 Bulletin 84/08

(45) Mention de la délivrance du brevet :
27.05.87 Bulletin 87/22

(84) Etats contractants désignés :
**AT BE CH DE GB IT LI LU NL SE**

(56) Documents cités :
EP-A- 0 022 004
FR-A- 2 330 075
FR-A- 2 421 422
FR-A- 2 459 512
FR-A- 2 499 264
US-A- 2 985 864
US-A- 2 987 705
US-A- 4 101 968
Ralston Meck: Encyclopedia of Computer Science,
1976, pages 1295-1304

(73) Titulaire : **L'UNIVERSITE DE BORDEAUX 1**
**351, cours de la Liberation**
**F-33405 Talence Cédex (FR)**

(72) Inventeur : **Vidalin, Jacques**
**12, rue du Palais des Guilhem**
**F-34000 Montpellier (FR)**
Inventeur : **Aucouturier, Jean, L.**
**73, rue de Loustalot**
**F-33170 Gradignan (FR)**

(74) Mandataire : **Joly, Jean-Jacques et al**
**CABINET BEAU DE LOMENIE 55, rue d'Amsterdam**
**F-75008 Paris (FR)**

Jouve, 18, rue St-Denis, 75001 Paris, France

EP 0 100 801 B1

## Description

La présente invention se rapporte à un procédé de rapprochement entre des données de référence et des données d'un fichier.

Un processus de rapprochement itératif et simultané entre données de référence et données d'un fichier est décrit dans le brevet français No. 2 293 741 et son certificat d'addition No. 2 330 075.

Un fichier sur lequel un rapprochement est à effectuer comporte des données constituées d'éléments d'information, par exemple des octets. Les données sont en longueur fixe ou variable. Dans le second cas, il est nécessaire d'adjoindre à chaque donnée un caractère spécial indiquant sa fin. Les données sont regroupées en séquences identifiées chacune par un label (ou étiquette, ou titre, ...) particulier appelé donnée spéciale. Les séquences peuvent être de longueur fixe ou variable, c'est-à-dire comporter un nombre fixe ou non de données. Dans le second cas, on adjoint à chaque séquence un caractère spécial indiquant sa fin.

Un rapprochement itératif et simultané consiste à reconnaître une relation entre chaque donnée spéciale ou non issue de la source et simultanément plusieurs données de référence. La relation est, par exemple, une relation d'égalité, d'inégalité, d'encadrement, ...

A cet effet, on compare chaque donnée issue de la source, élément d'information par élément d'information, avec les données de référence précédemment rangées dans des lignes successives d'une table de référence. Ces résultats de comparaisons sont combinés pour fournir le résultat de rapprochement et décider des informations à stocker.

Le brevet français No 79 15 701 (EP-A-22 004) a pour objet un procédé de commande permettant d'appliquer le procédé de rapprochement décrit ci-dessus à des informations contenues dans des structures quelconques de fichier tout en travaillant au rythme des informations délivrées par la source, sans repérage externe et tout en commandant l'exécution simultanée des fonctions élémentaires liées aux rapprochements et aux stockages à effectuer, sans interruption du déroulement du fichier. Ces fonctions élémentaires à exécuter simultanément sont relatives à la localisation, au traitement, au transfert des informations issues de la source, aux enchaînements séquentiels des ensembles d'opérations simultanées et aux tests concernant les résultats obtenus sur les précédents rapprochements.

Le procédé de commande objet du brevet FR-79 15 701 comporte essentiellement les étapes suivantes :

a) on enregistre des données de référence dans une table de référence en rangeant verticalement, dans des zones horizontales différentes de la table, des données de types différents, le rangement étant effectué dans l'ordre dans lequel les suites formées chacune de données de même type à rapprocher se présentent, non nécessairement de façon consécutive, dans le fichier, chaque zone horizontale de la table contenant des données de référence de même type rangées elles aussi verticalement par colonnes,

b) on enregistre dans une mémoire de commande, par ligne :

des premières informations de commande comportant, d'une part, des informations de commande relatives au rapprochement à effectuer entre des données de même type du fichier et des données de référence situées dans une zone horizontale de la table correspondant à la ligne de la mémoire dans laquelle dites informations de commande de rapprochement sont enregistrées, et, d'autre part, des informations de commande relatives au stockage de données issues du fichier, et

des secondes informations de commande d'opérations à effectuer à la fin du ou des rapprochements réalisés avec une ou plusieurs données du fichier et/ou du stockage d'une ou plusieurs données du fichier, lesdites informations de commande d'opérations comportant des informations de commande de saut pour commander l'enchaînement des traitements à effectuer

c) on fait défiler le fichier, et

d) on exécute les opérations correspondant aux premières informations de commande d'une première ligne de la mémoire de commande, puis les opérations correspondant aux secondes informations de commande de cette ligne dont, notamment, l'enchaînement sur une autre ligne non nécessairement consécutive de la mémoire de commande et éventuellement sur une zone horizontale de la table de référence correspondant à cette autre ligne.

La présente invention se propose d'appliquer un tel procédé de commande de rapprochement à l'exécution de traitements pour lesquels il est alors nécessaire de commander directement, sans opération intermédiaire, la permutation de fichiers en lecture, dans le cas de données provenant de plusieurs fichiers, et/ou la permutation de mémoires en écriture dans lesquelles sont stockées les informations à conserver provenant du fichier ou des fichiers, ces permutations étant fonction du ou des résultats des rapprochements effectués sur les données issues ou non d'un même fichier et pouvant être prises chacune aussi bien comme donnée à rapprocher que comme donnée de référence.

En effet, selon le procédé du brevet FR-79 15 701, le résultat des seuls rapprochements effectués entre une donnée issue d'un fichier et des données de références extérieures à ce fichier ou à d'autres fichiers contenant des données à rapprocher, permet d'exécuter au vol les opérations de reprise et de stockage qui suffisent à la plupart des traitements d'identification demandés en documentation automatique.

En particulier, il en est ainsi des opérations correspondant à la reconnaissance d'une chaîne de caractères situés en un rang quelconque dans un flot d'informations. Les seules contraintes pouvant résulter de l'application du procédé objet de la demande de brevet FR-79 15 701 résultent alors simplement du choix préalable des opérations de traitement et/ou des instructions de commande. Et on peut citer en exemple les traitements d'identification de données en ce qui concerne l'utilisation d'un masque binaire.

Il n'en est plus de même lorsque des rapprochements sont à effectuer entre une donnée issue d'un fichier et une ou plusieurs données du même fichier ou d'un autre fichier. Et tel est le cas, par exemple des opérations de séparation et d'interclassement constitutives du traitement de tri.

C'est pourquoi la présente invention a pour but d'étendre le procédé du brevet FR-79 15 701 à des applications nouvelles, comme le montre en particulier l'exemple des opérations de séparation et d'interclassement caractéristiques du traitement de tri (sort).

Ce but est atteint grâce à un procédé de traitement d'informations issues d'un fichier par rapprochement au vol entre des données issues d'au moins un premier fichier et des données de référence enregistrées dans des colonnes d'une table de référence avec un opérateur de rapprochement associé à chaque colonne de la table de référence, le procédé fournissant des résultats de rapprochement sous forme de résultat VRAI ou FAUX et étant caractérisé en ce que :

a) une donnée initiale de référence est enregistrée dans une première colonne de la table de référence, et on fait défiler le premier fichier,

b) une donnée correspondant à un premier article reçu du premier fichier est rapprochée avec la donnée de référence enregistrée dans la première colonne de la table de référence et est simultanément enregistrée dans une deuxième colonne de la table de référence pour constituer une donnée de référence en vue d'un rapprochement ultérieur avec une autre donnée issue du premier fichier ou d'un deuxième fichier,

c) des informations à conserver correspondant à ladite première donnée reçue sont simultanément stockées dans deux mémoires-tampons distinctes,

d) à la fin du rapprochement effectué, et en fonction du résultat de ce rapprochement, on commande éventuellement, pour le prochain rapprochement à effectuer, d'une part, la permutation des fichiers en lecture dans le cas d'articles provenant de deux fichiers et, d'autre part, la permutation des mémoires-tampons (100, 200 ; 300, 400) correspondant à la conservation ou à l'écrasement des informations stockées,

e) à la fin du rapprochement effectué, et éventuellement en fonction du résultat de ce rapprochement, on commande en outre, pour le prochain rapprochement à effectuer, la permutation des colonnes de la table de référence en lecture et en écriture, ainsi que la permutation des opérateurs de rapprochement associés, et

f) les étapes b) à e) du procédé sont réitérées pour chaque nouvel article reçu.

Pour l'exécution d'une opération de séparation, à chaque article reçu, la donnée choisie comme clef de sélection est rapprochée de la clef correspondant à l'article précédemment reçu et appartenant au même fichier. Le résultat du rapprochement commande l'écriture de l'article reçu dans la mémoire correspondant ou non à celle où l'article précédent a été antérieurement stocké. Le résultat du rapprochement commande par conséquent la permutation des périphériques en écriture.

Pour l'exécution d'une opération d'interclassement, à chaque article reçu, la donnée choisie comme clef de sélection est rapprochée à la fois, d'une part, — pour contrôle de la non-rupture de la séquence du fichier — de la clef de sélection correspondant à l'article précédemment reçu du même fichier et, d'autre part — pour l'opération d'interclassement proprement dite — de la clef de sélection correspondant à l'article précédemment reçu de l'autre fichier à partir d'un autre périphérique en lecture. La combinaison des résultats de rapprochement commande la permutation des périphériques en lecture et/ou des périphériques en écriture.

D'autres particularités de l'invention ressortiront à la lecture de la description faite ci-après, à titre indicatif mais non limitatif, en référence aux dessins annexés qui illustrent :

figure 1 un schéma montrant un exemple de mise en œuvre de l'invention pour une opération de séparation, et

figure 2 un schéma montrant un autre exemple de mise en œuvre de l'invention pour une opération d'interclassement.

Selon le premier exemple d'application, un code convenablement placé, dit commande de séparation, permet de commander sur les informations reçues du fichier et soumises à rapprochement une opération de séparation. Cette opération de séparation est préalable aux opérations d'interclassement que demande l'exécution d'un tri effectué pour ordonner les articles d'un fichier selon les valeurs croissantes ou décroissantes d'une donnée appartenant à l'article et choisie comme clef de sélection pour l'opération de tri. Le processus d'enchaînement correspondant à l'opération de séparation peut se caractériser en ce que :

1) l'initialisation du traitement se fait en chargeant la valeur possible maxima ou minima de la clef de sélection, selon le code-opération choisi, dans l'une des colonnes de la table des données de référence ;

2) la donnée à rapprocher issue de la source et correspondant pour le premier article à la clef de sélection est chargée au vol sur une autre colonne de la table de données de référence ; et simultanément, à la même adresse pour chacune desdites colonnes, elle est rapprochée selon le procédé de la demande de brevet FR 79 15 701 avec la donnée de référence d'initialisation contenue dans l'autre colonne de la table de référence. L'article correspondant à ladite première clef reçue de la source est stocké conditionnellement dans deux mémoires-tampons en écriture où il sera conservé nécessairement dans la mémoire-tampon correspondant à un résultat VRAI pour le rapprochement considéré ;

3) la donnée suivante à rapprocher reçue de la source et correspondant à la clef de sélection est chargée toujours au vol à la même adresse sur la première des colonnes de la table de référence ; et elle est rapprochée simultanément à la même adresse pour chacune des colonnes de la table de référence, selon le procédé du brevet FR 79 15 701 avec la donnée de référence enregistrée sur l'autre colonne et correspond à la clef de sélection de l'article contenu précédemment dans le fichier. L'article correspondant à cette seconde donnée à rapprocher reçue de la source est stocké conditionnellement dans les deux mémoires-tampons en écriture où il sera conservé dans l'une et écrasé dans l'autre des mémoires-tampons selon le résultat obtenu pour le rapprochement considéré ; et conformément à l'algorithme classique d'exécution des opérations de séparation, le résultat dudit rapprochement commande en fin d'article, pour les rapprochements qui seront à effectuer, la permutation éventuelle des mémoires-tampons en écriture, correspondant respectivement à la conservation et à l'écrasement des informations reçues, selon que le résultat obtenu est VRAI ou FAUX ;

4) jusqu'en fin de fichier, l'opération de séparation se poursuit en permutant, pour chaque clef de sélection reçue, la colonne de la table de référence où cette clef doit être enregistrée et la colonne de ladite table de référence contenant la donnée qui est à rapprocher avec la clef reçue de la source, et en permutant les opérateurs de rapprochement correspondants.

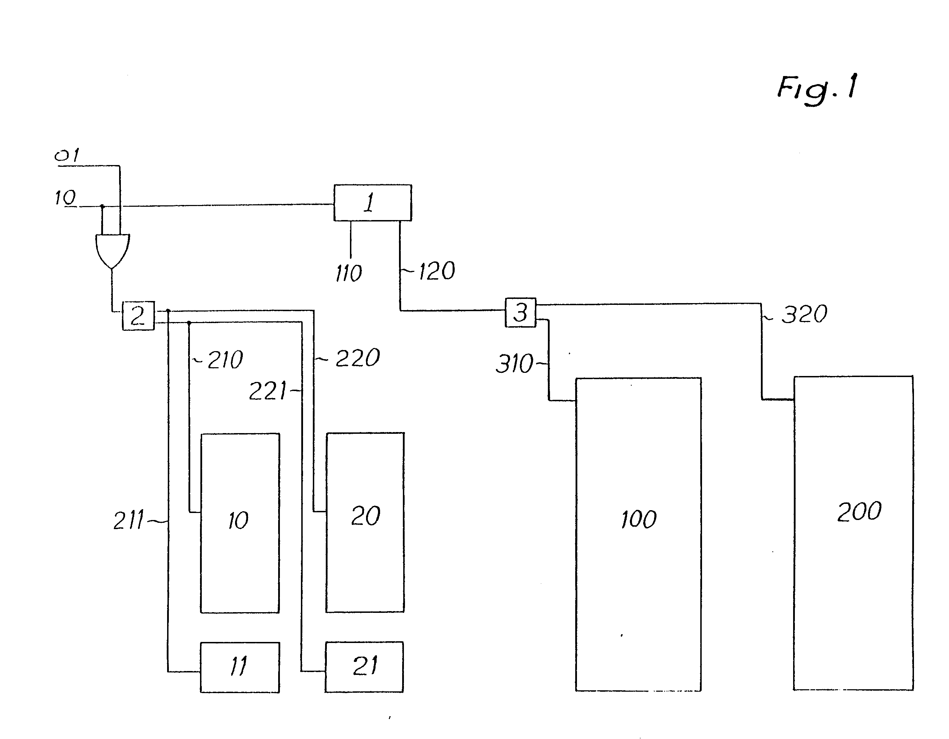

Comme le montre schématiquement la figure 1, d'une part, la liaison 10 de la commande de test des résultats activée par la liaison 01 de la commande d'enchaînement, commande la bascule T2 alternant respectivement, par les liaisons 210 et 220, les commandes d'écriture et de lecture des colonnes 10, 20 de la table de référence et, par les liaisons 211 et 221, les commandes des opérateurs 11 et 21 de rapprochement pour le rapprochement suivant à effectuer ; et d'autre part, le résultat transmis par la liaison 120 issue du décodeur des résultats 1 qui est mis en œuvre par la liaison 10 de la commande de test, commande la bascule T3 alternant respectivement par des liaisons 310 et 320, les commandes de conservation et d'écrasement des informations stockées dans les mémoires-tampons en écriture 100 et 200.

Pour plus de détails concernant la mise en œuvre du procédé général de commande de rapprochement, on pourra se reporter à la demande de brevet FR 79 15 701.

Selon un second exemple d'application de l'invention, un code convenablement placé, dit commande d'interclassement, permet de commander sur des informations issues de deux fichiers en lecture et soumises à rapprochement une opération d'interclassement. Le processus d'enchaînement, correspondant à ladite opération d'interclassement et donnée ci-dessous à titre d'exemple, est caractérisé dans la revendication 3. Il comprend les étapes suivantes :

1) l'initialisation du traitement se fait : en chargeant la valeur possible maxima ou minima de la clef de sélection selon le code opération choisi dans l'une des deux colonnes de la table des données de référence correspondant à des rapprochements à effectuer entre deux données reçues de deux fichiers différents et l'autre valeur maxima ou minima dans l'une des deux colonnes de la table des données de référence correspondant à des rapprochements à effectuer entre deux données reçues consécutivement du même fichier.

2) à partir de l'une de deux mémoires-tampons correspondant aux deux périphériques en lecture recevant les articles des deux fichiers, la première donnée à rapprocher correspondant à la clef de sélection est chargée sur l'autre colonne de la table des données de référence correspondant à des rapprochements à effectuer entre deux données reçues de deux fichiers différents, et, simultanément, sur l'autre colonne de la table des données de référence correspondant à des rapprochements à effectuer entre deux données reçues consécutivement du même fichier. Simultanément à son double enregistrement sur lesdites autres colonnes, ladite donnée reçue est soumise à un double rapprochement effectué simultanément selon le procédé du brevet FR-79 15 701, d'une part, avec la valeur d'initialisation chargée précédemment, comme décrit ci-dessus, sur la première des deux colonnes de la table de référence correspondant aux rapprochements à effectuer entre deux données reçues de deux fichiers différents et, d'autre part, avec la valeur d'initialisation chargée précédemment dans la première des deux colonnes de la table de référence correspondant aux rapprochements à effectuer entre deux données reçues consécutivement du même fichier. L'article reçu du fichier et contenant ladite clef de sélection soumise à double rapprochement est stocké conditionnellement dans les mémoires-tampons correspondant à chacun des périphériques en écriture, et dans lesquelles il sera conservé ou écrasé selon les résultats simultanés desdits rapprochements.

3) l'article suivant reçu et contenant la donnée suivante à rapprocher correspondant à la clef de sélection est de même stocké conditionnellement dans les mémoires-tampons correspondant à chacun des deux périphériques en écriture, dans lesquelles il sera de même conservé ou écrasé selon les résultats des rapprochements simultanés effectués sur la clef de sélection.

En effet, simultanément à l'opération d'écriture dudit article suivant sur les mémoires-tampons des deux périphériques en écriture, la donnée correspondant à la clef de sélection et appartenant audit article suivant est simultanément enregistrée à la même adresse de table, d'une part, sur la deuxième colonne de la table de référence correspondant aux rapprochements à effectuer entre deux données reçues de deux fichiers différents et, d'autre part sur la deuxième colonne de la table de référence correspondant aux rapprochements à effectuer entre deux données consécutives reçues du même fichier. Et toujours simultanément auxdites doubles opérations d'écriture, la donnée correspondant à la clef de sélection et appartenant audit article est rapprochée de façon encore simultanée, toujours à la même adresse et selon le brevet FR-79 15 701, d'une part, avec la donnée servant de référence et antérieurement reçue de l'autre fichier et, d'autre part, avec la donnée précédente servant de référence, immédiatement reçue de façon consécutive du même fichier que ladite donnée soumise à rapprochement.

4) l'opération d'interclassement se poursuit jusqu'à la reconnaissance des informations caractérisant respectivement la fin des deux fichiers en cours de traitement. Cette reconnaissance commande la lecture du signal permettant de déterminer si l'exploitation des fichiers, à partir des deux mémoires-tampons correspondant aux périphériques en lecture, a donné lieu à un basculement des mémoires-tampons correspondant aux périphériques en écriture, et s'il faut, par conséquent, poursuivre ou non l'exécution du traitement d'interclassement en permutant les périphériques de lecture en écriture et réciproquement d'écriture en lecture.

Pour chaque article reçu et conformément à l'algorithme classique d'exécution des opérations d'interclassement, la combinaison des résultats obtenus pour les rapprochements correspondants commande, en fin d'article d'une part, la permutation des colonnes des tables de référence en lecture et en écriture, ainsi que la permutation de leurs opérateurs correspondants, et, d'autre part, la permutation des mémoires-tampons en écriture et/ou en lecture. Lesdits résultats concernent :

le rapprochement effectué, pour ledit article entre deux données reçues des deux fichiers,

le rapprochement effectué, pour ledit article entre deux données reçues consécutivement du même fichier,

le rapprochement effectué, pour l'article précédemment reçu entre deux données reçues consécutivement du même fichier.

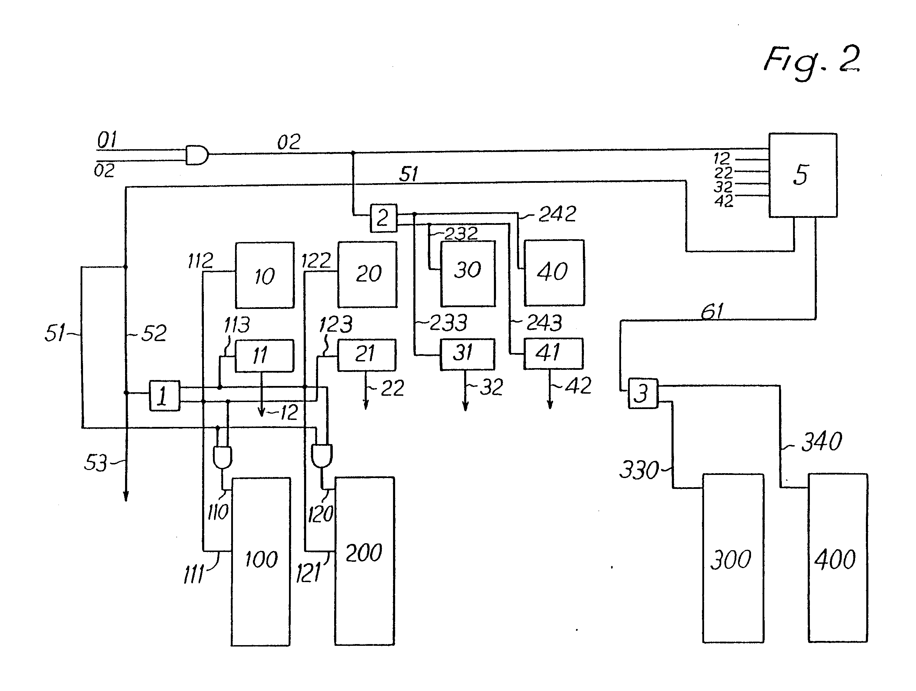

Comme le montre schématiquement la figure 2 :

le décodeur 5 reçoit, par les liaisons 12 et 22, les résultats des opérateurs de traitement 11 et 21 correspondant aux rapprochements effectués entre deux données reçues de deux fichiers différents et, par les liaisons 32 et 42, les résultats des opérateurs de traitement 31 et 41 correspondant aux rapprochements effectués entre deux données reçues consécutivement du même fichier, le décodeur 5 ayant mémorisé le résultat correspondant au dernier rapprochement effectué entre deux données reçues consécutivement du même fichier pour l'article précédent.

la commande de test, par la liaison 02 activée par la liaison 01 de la commande d'enchaînement, active, d'une part, le décodeur 5 et, d'autre part, la bascule T2 commandant par les liaisons 232 et 242 la permutation en écriture et en lecture des colonnes 30 et 40 de la table de référence correspondant au rapprochement à effectuer entre deux données reçues consécutivement du même fichier ainsi que, par les liaisons 233 et 243, la permutation des opérateurs 31 et 41 correspondants.

la liaison 51 en sortie du décodeur 5 commande, selon les résultats reçus par le décodeur 5 :

par les liaisons 110 et 120 l'initialisation à la valeur de reprise de la mémoire-tampon 100 ou 200 précédemment en lecture.

les bascules T1 qui commandent : par les liaisons 111 et 121, la permutation des mémoires 100 et 200 en lecture correspondant aux deux périphériques en lecture où sont stockés les fichiers à traiter ; par les liaisons 112 et 122, la permutation en écriture et en lecture des colonnes 10, 20 de la table de référence correspondant aux rapprochements effectués entre données reçues des deux fichiers ; et par les liaisons 113 et 123, la permutation des opérateurs de rapprochement 11 et 21 associés aux colonnes 10, 20. La permutation des mémoires-tampons 100 et 200 en lecture est commandée indépendamment de la permutation des colonnes 10, 20 et de leurs opérateurs 11, 21.

la liaison 53 permettant d'effectuer à partir de la mémoire-tampon en lecture 100 ou 200, l'enregistrement dans l'une des colonnes 10, 20 de la première table de référence et dans l'une des colonnes 30, 40 de la deuxième table de référence de la donnée formant donnée de référence pour le rapprochement suivant à effectuer et le stockage dans l'une des mémoires-tampons 300 et 400 correspondant aux périphériques en écriture, des informations à conserver dans les mémoires de ces périphériques.

La liaison 61, toujours selon les résultats reçus par le décodeur 5 commande, par la bascule T3 et les liaisons 330 et 340 la permutation et l'initialisation à leur valeur de reprise des mémoires-tampons 300 et 400 correspondant aux deux périphériques en écriture.

On remarque que les éléments et les commandes des dispositifs de la figure 1 et de la figure 2 peuvent se combiner aisément entre eux.

Le procédé selon la présente invention n'est pas limité aux seuls exemples de réalisation décrits ci-dessus, ni aux seules applications des opérations de séparation et d'interclassement du traitement de tri. En particulier, il est susceptible de connaître de nombreux développements dans le domaine documentaire pour des applications qui demandent des mises à jour, des fusions ou de simples comparaisons parallèles à effectuer sur des informations appartenant à un ou plusieurs fichiers issus ou non de la même source, mais soumis au même processus de rapprochement.

## Revendications

1. Procédé pour le traitement d'informations issues d'un fichier par rapprochement au vol entre des données issues d'au moins un premier fichier et des données de référence enregistrées dans des colonnes d'une table de référence, avec un opérateur de rapprochement associé à chaque colonne (10, 20, 30, 40) de la table de référence, ledit procédé fournissant des résultats de rapprochement sous forme de résultat VRAI ou de résultat FAUX, caractérisé en ce que :

a) une donnée initiale de référence est enregistrée dans une première colonne de la table de référence, et on fait défiler le premier fichier,

b) une donnée correspondant à un premier article reçu du premier fichier est rapprochée avec la donnée de référence enregistrée dans la première colonne de la table de référence et est simultanément enregistrée dans une deuxième colonne de la table de référence pour constituer une donnée de référence en vue d'un rapprochement ultérieur avec une autre donnée issue du premier fichier ou d'un deuxième fichier,

c) des informations à conserver correspondant à ladite première donnée reçue sont simultanément stockées dans deux mémoires-tampons distinctes,

d) à la fin du rapprochement effectué, et en fonction du résultat de ce rapprochement, on commande éventuellement, pour le prochain rapprochement à effectuer, d'une part, la permutation des fichiers en lecture dans le cas d'articles provenant de deux fichiers et, d'autre part, la permutation des mémoires-tampons (100, 200, 300, 400) correspondant à la conservation ou à l'écrasement des informations stockées,

e) à la fin du rapprochement effectué, et éventuellement en fonction du résultat de ce rapprochement, on commande en outre, pour le prochain rapprochement à effectuer, la permutation des colonnes de la table de référence en lecture et en écriture, ainsi que la permutation des opérateurs de rapprochement associés, et

f) les étapes b) à e) du procédé sont réitérées pour chaque nouvel article reçu.

2. Procédé selon la revendication 1, pour exécuter une opération de séparation d'informations issues d'un fichier, caractérisé en ce que :

a) une valeur initiale de clef de sélection pour l'opération de séparation est enregistrée dans la première colonne (Fig. 1 : 10) de la table de référence,

b) la donnée correspondant à la clef de l'opération de séparation pour un premier article reçu du fichier est simultanément, d'une part, rapprochée avec la valeur de clef enregistrée dans la première colonne de la table de référence et, d'autre part, enregistrée dans la deuxième colonne de la table de référence pour constituer une valeur de clef de référence en vue d'un rapprochement ultérieur avec la donnée correspondant à la clef pour l'article suivant du fichier,

c) des informations à conserver pour ledit premier article reçu du fichier sont simultanément stockées dans les deux mémoires-tampons (fig. 1 : 100, 200),

d) à la fin du rapprochement effectué, et en fonction du résultat de ce rapprochement, on commande éventuellement pour le prochain rapprochement à effectuer, la permutation des mémoires-tampons correspondant à la conservation ou à l'écrasement des informations reçues.

d) à la fin du rapprochement effectué, on commande la permutation des colonnes de la table de référence en lecture et en écriture, ainsi que la permutation des opérateurs de rapprochement associés, et

f) les étapes b) à c) sont réitérées pour chaque nouvel article reçu du fichier.

3. Procédé selon la revendication 1, pour exécuter une opération d'interclassement d'informations issues de deux fichiers, caractérisé en ce que :

a) une première valeur initiale de clef de sélection pour l'opération d'interclassement entre articles reçus consécutivement du même fichier est enregistrée dans une première colonne d'une première table de référence (fig. 2 : 10), et une deuxième valeur initiale de la clef de sélection pour l'opération d'interclassement entre articles reçus des deux fichiers est enregistrée dans une première colonne (fig. 2 : 30) d'une deuxième table de référence,

b) la donnée correspondant à la clef de l'opération d'interclassement pour un premier article reçu du premier fichier (300) est simultanément, d'une part, rapprochée avec les deux valeurs de clef enregistrées dans les premières colonnes des tables de référence et, d'autre part, enregistrée dans des deuxièmes colonnes des tables de référence pour constituer des valeurs de clef de référence en vue de rapprochements ultérieurs,

c) des informations à conserver pour ledit premier article reçu sont simultanément stockées dans les deux mémoires-tampons (100, 200),

d) à la fin des rapprochements effectués, et en fonction des résultats de ces rapprochements, on commande, pour les prochains rapprochements à effectuer, d'une part, la permutation éventuelle des fichiers en lecture et, d'autre part, la permutation éventuelle des mémoires-tampons correspondant à la conservation ou à l'écrasement des informations reçues,

e) à la fin des rapprochements effectués, et en fonction des résultats de ces rapprochements, on commande pour les prochains rapprochements à effectuer, la permutation éventuelle des colonnes de l'une ou des deux tables de référence, ainsi que des opérateurs de rapprochement associés, et

f) les étapes b) à e) sont réitérées pour chaque nouvel article reçu de l'un ou l'autre des fichiers.

**Claims**

1. Method for processing information proceeding from a file by comparison as the information is received, between data proceeding from at least a first file and reference data recorded in columns of a reference table, with a comparison computing unit associated with each column (10, 20, 30, 40) of the reference table, said method supplying comparison results in the form of RIGHT result or WRONG result, characterized in that :

a) an initial reference data is recorded in a first column of the reference table and the first file is run,

b) a data corresponding to a first article proceeding from the first file is compared with the reference data recorded in the first column of the reference table and is simultaneously recorded in a second column of the reference table to constitute a reference data in view of a subsequent comparison with an other data proceeding from the first file or from a second file,

c) information to be kept corresponding to said first data received are simultaneously stored in two distinct buffer-memories,

d) at the end of the effected comparison, and as a function of the result of said comparison, for the next comparison to be effected, it is optionally proceeded, on the one hand, to the exchange of the read-out file in case of articles proceeding from two files, and, on the other hand, to the exchange of buffer-memories (100, 200, 300, 400) corresponding to the saving and the erasing of the stored information,

e) at the end of the effected comparison, and optionally as a function of the result of said comparison, it is proceeded to an exchange of the read-out and written-in columns of the reference table for the next comparison to be effected, as well as an exchange of the associated comparison computing units, and

f) steps b) to e) of the method are repeated for each new received item.

2. Method according to claim 1, for performing an operation of separation of information proceeding from a file, characterized in that :

a) an initial value of selection key for the operation of separation is recorded in the first column (Fig. 1 : 10) of the reference table,

b) the data corresponding to the separation operation key for a first item proceeding from the file is simultaneously, on the one hand, compared with the key value recorded in the first column, and on the other hand, recorded in the second column of the reference table to constitute a reference key value in view of a subsequent comparison with the data corresponding to the key for the following item of the file,

c) information to be kept for said first item proceeding from the file are simultaneously stored in the two buffer-memories (Fig. 1 : 100, 200),

d) at the end of the effected comparison, and as a function of the result of said comparison, the exchange of the buffer-memories corresponding to the saving or erasing of the received information is optionally controlled for the next comparison to be effected,

d) at the end of the effected comparison, the exchange of the read-out and written-in columns of the reference table is controlled, as well as an exchange of the associated comparison computing units, and

f) steps b) and c) are repeated for each novel item proceeding from the file.

3. Method according to claim 1, for carrying out an operation of collation of information received from two files, characterized in that :

a) a first initial value of selection key for the operation of collation between items proceeding consecutively from the same file is recorded in a first column of a first reference table (Fig. 2 : 10), and a second initial value of the selection key for the collation operation between items proceeding from the two files is recorded in a first column (Fig. 2 : 30) of a second reference table,

b) the data corresponding to the collation operation key for a first item proceeding from the first file (300) is simultaneously, on the one hand, compared with the two key values recorded in the first columns of the reference tables, and on the other hand, recorded in the second columns of the reference tables to constitute key reference values in view of subsequent comparisons,

c) information to keep for said first article received are simultaneously stored in the two buffer-memories (100, 200),

d) at the end of the comparison effected, and as a function of the results of said comparisons, it is proceeded to an optional exchange of the read-out files for the next comparisons to be effected, and on the other hand, to an optional exchange of the buffer-memories corresponding to the storage or to the erasing of the received information,

e) at the end of the effected comparisons, and as a function of the results of said comparisons, it is proceeded to an optional exchange of the columns of one or of both reference tables, and of the associated comparison computing units, for the next comparisons to be effected, and

f) steps b) to e) are repeated for each novel item received from one or both files.

**Patentansprüche**

1. Verfahren zur Verarbeitung von Informationen einer Datei mittels Vergleichssteuerung zwischen Daten aus mindestens einer ersten Datei und Bezugsdaten, die in Spalten einer Bezugstabelle gespeichert sind mit einem Vergleichssteuerungsoperator, der jeder Spalte (10, 20, 30, 40) der Bezugstabelle zugeordnet ist, wobei das Verfahren Vergleichssteuerungswerte in Form eines Ergebnisses « wahr » oder « falsch » liefert, dadurch gekennzeichnet, daß :

a) ein ursprüngliches Bezugsdatum in einer ersten Spalte der Bezugstabelle gespeichert ist und der erste Speicher durchlaufen wird,

b) ein Datum, daß einem ersten Datensatz entspricht, der von der ersten Datei empfangen wurde, wird mit der Bezugsgröße, die in der ersten Spalte der Bezugstabelle gespeichert ist, vergleichsgesteuert und gleichzeitig in einer zweiten Spalte der Bezugstabelle gespeichert um eine Bezugsgröße hinsichtlich einer späteren Vergleichssteuerung mit einer anderen Größe, die von der ersten oder der zweiten Datei ausgegeben wird, zu bilden,

c) die zu behaltenden Informationen, die dem ersten enthaltenden Datum entsprechen gleichzeitig in zwei getrennten Pufferspeichern gespeichert werden,

d) am Ende der durchgeführten Vergleichssteuerung und in Abhängigkeit vom Ergebnis der Vergleichssteuerung ggf. für die nächste durchzuführende Vergleichssteuerung einerseits die Permutation der Lesespeicher im Fall von Datensätzen, die aus den beiden Dateien stammen und andernfalls die Permutation der Pufferspeicher (100, 200 ; 300, 400) befohlen wird, was einem Erhalten oder einem Löschen der gespeicherten Informationen entspricht,

e) am Ende der durchgeführten Vergleichssteuerung und ggf. in Abhängigkeit vom Ergebnis der Vergleichssteuerung ferner für die folgende Vergleichssteuerung die Permutation der Spalten der Schreib- und Lesebezugstabelle sowie die Permutation der zugehörigen Vergleichssteuerungsoperatoren befohlen wird, und

f) die Schritte b) bis e) des Verfahrens für jeden neuen empfangenen Datensatz wiederholt werden.

2. Verfahren nach Anspruch 1 zum Durchführen der Trennung von Informationen, die von einer Datei ausgegeben werden, dadurch gekennzeichnet, daß :

a) ein Ursprungs-Schlüsselwert der Auswahl zur Durchführung der Trennung in einer ersten Spalte (Fig. 1 : 10) der Bezugstabelle gespeichert wird,

b) der entsprechende Schlüsselwert der Trennung für einen ersten Datensatz, der von der Datei empfangen wird, gleichzeitig einerseits mit den in der ersten Spalte in Bezugstabelle gespeicherten Schlüsselwert vergleichsgesteuert wird und andererseits in der zweiten Spalte der Bezugstabelle gespeichert wird, um einen Bezugsschlüsselwert hinsichtlich einer nachfolgenden Vergleichssteuerung mit der entsprechenden Schlüsselgröße für den nächsten Datensatz der Datei zu bilden,

c) die zu behaltenden Informationen für den empfangenen ersten Datensatz der Datei gleichzeitig in zwei Pufferspeichern (Fig. 1 : 100, 200) abgespeichert werden,

d) am Ende der durchgeführten Vergleichssteuerung und in Abhängigkeit vom Ergebnis dieser Vergleichssteuerung ggf. für die nächstfolgend durchzuführende Vergleichssteuerung die Permutation der Pufferspeicher befohlen wird, entsprechend des Beibehaltens oder des Löschens der empfangenen Informationen,

d) am Ende der durchgeführten Vergleichssteuerung die Permutation der Spalten der Schreib- und Lesebezugstabelle sowie die Permutation der zugehörigen Vergleichssteuerungsoperatoren befohlen wird, und

f) die Schritte b) bis c) für jeden von der Datei empfangenen neuen Datensatz wiederholt werden.

3. Verfahren nach Anspruch 1, zum Sortieren der von den beiden Dateien ausgegebenen Informationen, dadurch gekennzeichnet, daß :

a) ein erster ursprünglicher Selektionsschlüssel wird zum Sortieren zwischen nacheinander an der selben Datei empfangenen Datensätzen in einer ersten Spalte einer ersten Referenztabelle (Fig. 2 : 10) gespeichert wird und ein zweiter ursprünglicher Schlüsselwert der Selektion zur Durchführung des Sortierens von Datensätzen, die von zwei Dateien empfangen werden in einer ersten Spalte (Fig. 2 : 30) einer zweiten Bezugstabelle gespeichert wird,

b) die entsprechende Schlüsselgröße für das Sortieren eines ersten empfangenen Datensatzes der ersten Datei (300) gleichzeitig einerseits mit zwei in den ersten Spalten der Bezugstabellen gespeicherten Schlüsselwerten einerseits vergleichgesteuert und andererseits in den zweiten Spalten der Bezugstabellen gespeichert um Bezugsschlüsselwerte hinsichtlich späterer Vergleichssteuerungen zu bilden,

c) die zu behaltenden Informationen für den ersten empfangenen Datensatz gleichzeitig in zwei Pufferspeichern (100, 200) gespeichert werden,

d) am Ende der durchgeführten Vergleichssteuerungen und in Abhängigkeit vom Ergebnis dieser Vergleichssteuerungen für die nachfolgend durchzuführenden Vergleichssteuerungen einerseits die evtl. Permutation der Lesedateien und andererseits ggf. die Permutation der Pufferspeicher zum Behalten oder zum Löschen der empfangenen Informationen befohlen wird,

e) am Ende der durchgeführten Vergleichssteuerungen und in Abhängigkeit von den Ergebnissen dieser Vergleichssteuerungen für die nachfolgend durchzuführenden Vergleichssteuerungen die evtl. Permutation der Spalten eines oder beider Bezugstabellen sowie der zugehörigen Vergleichssteuerungsoperatoren befohlen wird, und

f) die Schritte b) bis e) für jede von der einen oder anderen Datei erhaltenen Datensatz wiederholt werden.

Fig.1

Fig. 2

0 100 801